# EUROPEAN PATENT APPLICATION

(11) **EP 4 617 223 A1**
(43) Date of publication of application: **17.09.2025**
(21) Application number: 25157719.3
(22) Date of filing: 13.02.2025
(51) Int. Cl.: B66F 9/075, B60K 1/04, B60L 50/60, B60S 5/06, B62B 5/00, B60L 1/00

(54) **INDUSTRIAL TRUCK WITH AN IMPROVED BATTERY COMPARTMENT DOOR**

(30) Priority: 11.03.2024 IT 202400005392
(71) Applicant: Toyota Material Handling Manufacturing Italy S.p.A, 40132 Bologna (IT)
(72) Inventor: Dinale, Silvia, 40132 Bologna (IT); Buzzi, Luigi, 40132 Bologna (IT)
(74) Representative: Hoffmann Eitle

(57) **Abstract**

An industrial truck (10) comprises a compartment (30) designed to receive an electric battery system (12) and a hatch (11) movable between a closing position for closing the compartment and an opening position in which an internal volume of the compartment is placed in communication with the outside of the industrial truck, the hatch having a length, a width, and a thickness, wherein the width is smaller than 50% of the height of the compartment.

## Description

### Field of the invention

The present invention relates to an industrial truck, in particular with an improved battery compartment hatch.

### Technical background

It is known in the art to make industrial trucks equipped with material handling means, such as a forklift truck, which can be used on an industrial site, a warehouse, a port or the like. Recently, electrically powered industrial trucks, i.e. equipped with a battery capable of powering the main functions of the industrial truck such as locomotion and/or material handling, have spread.

The electrically powered trucks are provided with a frame that forms a battery compartment. The battery compartment is accessible from the outside through an opening that can be opened or closed through a door, for example a side door of the industrial truck. According to a conventional technique, the opening is located on a side flank of the industrial truck and the door for opening the battery compartment is hinged to the frame with a hinging having a substantially vertical axis. To achieve a high autonomy, the battery and, consequently, the battery compartment must be sized appropriately. Therefore, the battery compartment and the door for closing the compartment have a considerable extension. As a result, in order to open the side door, a lot of free space is needed on the side of the industrial truck.

In addition, during the battery charging step, it is advisable to leave the door open to allow ventilation and air circulation, for example to facilitate the evacuation of gaseous substances that are generated during charging or to evacuate heat. However, due to the encumbrance of the battery compartment door, it is not possible to recharge the battery with adequate ventilation when the industrial truck is parked in narrow spaces.

### Summary of the invention

An object of the present disclosure is to obviate the above-mentioned problems. In the light of this purpose, the present disclosure provides an industrial truck comprising a compartment designed to receive an electric battery system and a hatch movable between a closing position for closing the compartment and an opening position in which an internal volume of the compartment is placed in communication with the outside of the industrial truck, the hatch having a length, a width, and a thickness, wherein the width is smaller than 50% of a height of the battery compartment.

Preferably, the width is smaller than 25% of the height of the battery compartment and preferably greater than 5% of the height of the battery compartment.

Preferably, the hatch has an elongated shape, preferably with a substantially horizontal extension. Preferably, the hatch has a width that is smaller than 30% of the length of the hatch, preferably smaller than 20% of the length of the hatch. The width of the hatch may extend in a vertical direction and the length in a horizontal direction.

Preferably, the hatch is mounted on a door for closing the compartment in a movable manner between the opening and closing positions, said closing door being in turn movable between a closing position for closing the compartment and an opening position. Preferably, the compartment is open laterally for a height substantially equal to the entire height of the compartment.

Preferably, the closing door is hinged to a frame of the industrial truck with a hinging having a substantially vertical axis.

Preferably, the hatch is mounted rotatably between the opening position and the closing position.

Preferably, the hatch in the closing position is in a position that follows the geometry of a door for closing the compartment, and in the opening position it is arranged facing towards the outside of the industrial truck.

Preferably, the hatch is hinged along a larger side thereof so as to be able to move between the opening and closing positions.

Preferably, the hatch is hinged at a larger side thereof which is arranged at the lower part when in the closing position.

Preferably, the hatch is positioned at an upper part of the compartment.

Preferably, the length of the hatch is equal to at least 70% of a horizontal width of the compartment, preferably equal to at least 90% of the horizontal width of the compartment.

Preferably, the compartment extends between a front axle and a rear axle of the industrial truck so as to occupy at least 40% of the gap between said rear axle and said front axle, more preferably at least 60% of the gap between said rear axle and said front axle, even more preferably at least 60% of the gap between said rear axle and said front axle. Gap between front axle and rear axle means the space between a front wheel and a rear wheel of the truck in a longitudinal direction of the truck itself.

Preferably, the compartment has a height equal to at least 60% of the height of a frame of the industrial truck beneath a seat for the driver of the industrial truck, preferably at least 80% of the height of a frame of the industrial truck beneath a seat for the driver of the industrial truck.

Preferably, the hatch is substantially plate-shaped.

Preferably, the hatch and the door can move independently between their respective opening and closing positions.

Thanks to the presence of the hatch according to the present disclosure, it is possible to properly ventilate the battery compartment without the need to fully open the compartment. The reduced size of the hatch compared to the compartment allows to reduce the encumbrances of the truck in a configuration that allows charging with ventilation in narrow spaces.

### Brief description of the drawings

The present invention will be illustrated with reference to exemplary embodiments described with reference to the accompanying drawings.

In the drawings:
- figure 1 illustrates a view of an industrial truck according to the present disclosure with an opened hatch;
- figure 2 illustrates a view of an industrial truck according to the present disclosure with the closed hatch;
- figure 3 illustrates a view of an industrial truck according to the present disclosure with the door of the battery compartment open;
- figure 4 illustrates a side view of the industrial truck with the battery compartment shown in hatching;
- figure 5 illustrates a side view of the industrial truck.

### Detailed description

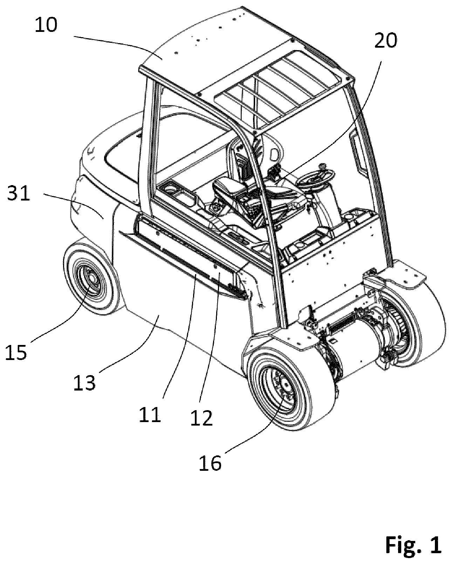

With reference to the figures, an industrial truck 10 according to the present disclosure is shown in figure 1. For example, the industrial truck 10 may be employed on industrial sites, warehouses, ports, airports, logistic hubs, or the like. The industrial truck 10 comprises a front axle 16 and a rear axle 15. The industrial truck 10 may include a cockpit. The cockpit can be closed or opened. A seat 20 for the operator of the industrial truck 10 is located in the cockpit.

The industrial truck 10 may for example be a forklift truck. The industrial truck 10 could advantageously be a counterbalanced truck. Also another type of industrial truck could be made according to the present disclosure. In general, the industrial truck may include material handling means, even if not shown in the figure; for example, the material handling means may be mounted in the front part of the industrial truck 10; the material handling means can for example include a mast along which a material gripping device, such as a fork, a gripper, or other known devices, can slide in a substantially vertical direction.

The industrial truck 10 may be an electrically driven, or electrically powered, truck. The electrically powered industrial truck 10 can be of the hybrid type (i.e. equipped with a traction or locomotion system that includes at least one electric motor and at least one combustion engine), or it could be completely electric (therefore with a traction system that does not include a combustion engine and instead includes only one or more electric motors).

The industrial truck 10 is equipped with an electric battery system 12; for example, the electric battery system 12 may be configured to power a primary function of the industrial truck, such as for example the locomotion function and/or the material handling function.

The electric battery system 12 may comprise one, or consist of any, battery system or electrical energy storage system, such as for example a lithium, lead acid battery, or other types of battery, or a combination of a plurality of battery modules or packs of any type according to the known art.

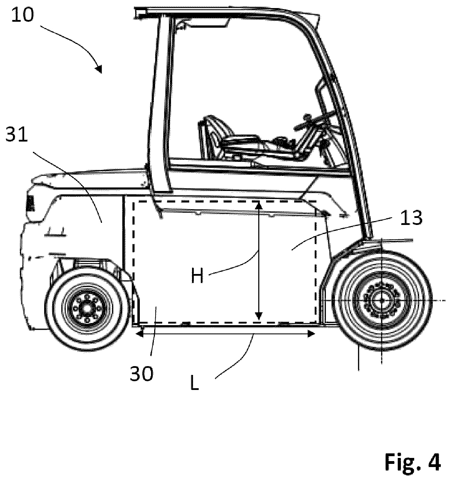

The industrial truck 10 comprising a compartment designed to receive the electric battery system 12. The compartment (also called "battery compartment") is represented by the dotted line in figure 4 and designated with reference 30. In one embodiment, the compartment 30 is formed by a frame 31 of the industrial truck 10. The compartment 30 has a side opening on a flank of the industrial truck. Preferably, the compartment 30 is closed by a frame part on the front part and rear part of the industrial truck, and also on the side flank opposite to that in which the opening is present. The compartment 30 may be configured so that the battery system 12 can be removed from the compartment itself, but the present disclosure is not so limited and the battery system could also be integrated in a non-removable manner.

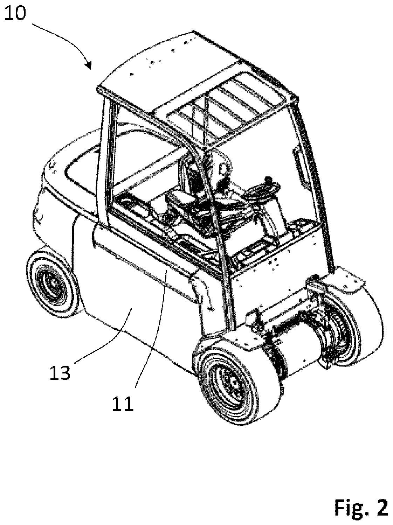

As shown in figures 1 and 2, the industrial truck 10 comprises a hatch 11 movable between a closing position for closing the compartment and an opening position in which an internal volume of the compartment is placed in communication with the outside of the industrial truck. Figure 1 shows the hatch 11 in the opening position, while figure 2 shows the hatch 11 in the closing position. In the opening position, the hatch 11 allows the circulation of air from inside of the battery compartment to the outside and vice versa.

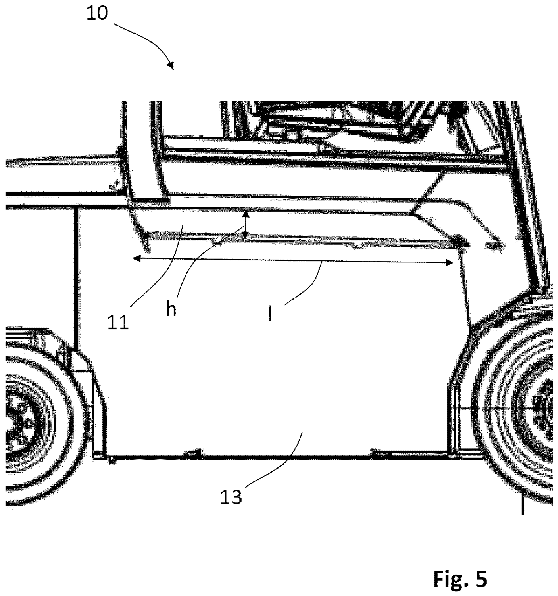

The hatch 11 has a length, a width, and a thickness, wherein the width is smaller than 50% of the height of the battery compartment. Thanks to this measure, it is possible to guarantee air circulation without the need for abundant space around the truck, therefore even when the industrial truck 10 is parked in narrow spaces. Preferably the length corresponds to a larger dimension and the width to a smaller dimension. Preferably, the length of the hatch 11 extends in a longitudinal direction of the truck, for example a substantially horizontal direction from the rear axle to the front axle. Preferably, the width of the hatch 11 extends in a substantially vertical direction. In figure 5 the width of the hatch 11 is indicated with reference h, while the length of the hatch 11 is indicated with reference I. The height of the battery compartment 30 is designated with reference H in figure 4, and extends substantially vertically.

The hatch 11 may advantageously be substantially plate-shaped.

In a preferred embodiment, the width I of the hatch 11 is smaller than 25% of the height H of the battery compartment 30 and preferably greater than 5% of the height H of the battery compartment 30.

In a preferred embodiment, the hatch 11 has an elongated shape, preferably with a substantially horizontal extension. As shown in the figure, the elongated shape of the hatch has a greater length extending in the longitudinal direction with respect to the industrial truck.

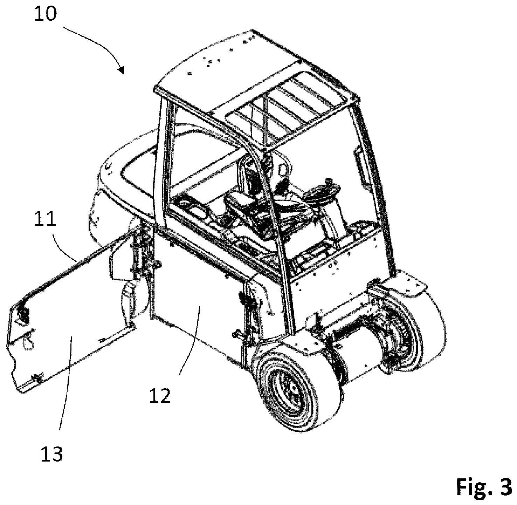

The hatch 11 is advantageously mounted on a closing door 13 for closing the compartment. The closing door 13 is in turn movable between a closing position for closing the compartment and an opening position in which the compartment is open laterally. In the opening position of the door 13, represented in figure 3, the compartment 30 is open for a height equal to the entire height H of the compartment 30. When the door 13 is fully open, the battery 12 may be removed from the compartment in one embodiment. However, in an alternative embodiment, the battery 12 could also be integrated so that it cannot be removed from the industrial truck, even when the door 13 is configured to fully open the side opening of the compartment 30. The hatch 11 is mounted in a movable manner between the opening and closing positions on the door 13. Preferably, the closing door 13 is hinged to the frame 31 of the industrial truck with a hinging having a substantially vertical axis. The hatch 11 is mounted rotatably between the opening position and the closing position. Preferably, the hatch 11 in the closing position is in a position that follows the geometry of a closing door 13 for closing the compartment (see figure 2), and in the opening position it is arranged facing the outside of the industrial truck (see figure 1). In the closing position, the hatch 11 can be tilted diagonally towards the inside of the industrial truck 10, however other configurations are also possible, for example the hatch could be positioned vertically in the closing position. The hatch 11 can be hinged along a larger side thereof so as to be able to move between the opening and closing positions. For example, the hatch 11 is hinged to the door 13, as shown in figures 1-3. The hatch 11 can be hinged at a larger side thereof which it is arranged at the lower part when in the closing position. However, other types of hatch connection could alternatively also be conceived, for example with a sliding engagement of the hatch 11 with respect to the door 13. The door 13 could also be absent and the hatch 11 could be mounted directly on a frame or a body part of the industrial truck. The hatch 11 and the door 13 jointly close the side opening of the compartment 30, when they are both in the closing position. The hatch 11 is positioned at an upper part of the compartment 30. This allows to facilitate air circulation between the compartment 30 and the outside of the industrial truck. Preferably, the hatch 11 is positioned, when in the closing position, at the height of a gap between the battery system 12 and an upper wall of the compartment 30. Preferably, the width h of the hatch 11 is greater than the height of the gap between the battery system 12 and the upper wall of the compartment 30. However, other hatch configurations are also possible.

The hatch 11 and the door 13 can move independently between their respective opening and closing positions. Therefore, the hatch 11 can be opened when the door 13 is closed. Conversely, the door 13 can be opened and the hatch 11 can be in the closing position with respect to the door 13. This allows flexibility in choosing the desired configuration for ventilation and/or maintenance of the compartment and/or battery system as required.

In one embodiment, the length I of the hatch 11 is equal to at least 70% of the horizontal dimension L of the compartment, preferably equal to at least 90% of the horizontal dimension L of the compartment. In the embodiment shown in the figures, the hatch 11 extends almost for the entire horizontal extension of the compartment.

The compartment 30 extends between a front axle 16 and a rear axle 15 of the industrial truck; for example the compartment extends horizontally so as to occupy at least 40% of the gap between said rear axle and said front axle, understood as the space between the front wheels and the rear wheels of the industrial truck. Preferably, the compartment 30 extends horizontally for a length L (see figure 4) so as to occupy at least 60% of the gap between said rear axle and said front axle, more preferably at least 80%. However, other configurations are also possible. Preferably, the compartment 30 is positioned beneath the cockpit, for example beneath the seat 20 of the user. In one embodiment, the compartment 30 has a height H (see figure 4) equal to at least 60% of the height of a frame of the industrial truck beneath the seat 20 for the driver of the industrial truck, preferably at least 80% of the height of a frame 31 of the industrial truck beneath a seat 20 for the driver of the industrial truck.

Preferably, the hatch 11 has a width h that is smaller than 30% of the length I of the hatch 11, preferably smaller than 20% of the length of the hatch 11, even more preferably smaller than 15% of the length of the hatch 11. When the door 13 and the hatch 11 are both in the closing position, the side opening of the compartment 30 is substantially closed. When the door 13 is in the closing position and the hatch 11 is in the opening position, the compartment 30 is in communication with the outside at an opening having a surface substantially corresponding to that of the hatch 11.

The present disclosure allows proper ventilation of the battery compartment during the charging step, even when the industrial truck is parked in narrow spaces.

## Claims

1. An industrial truck (10) comprising a compartment (30) designed to receive an electric battery system (12) and a hatch (11) movable between a closing position for closing the compartment and an opening position in which an internal volume of the compartment is placed in communication with the outside of the industrial truck, the hatch having a length (I), a width (h), and a thickness, wherein the width (h) is smaller than 50% of a height (H) of the compartment.

2. An industrial truck (10) according to claim 1, wherein the width (h) is smaller than 25% of the height (H) of the battery compartment and preferably greater than 5% of the height of the battery compartment.

3. An industrial truck (10) according to claim 1 or 2, wherein the hatch (11) has an elongated shape, preferably with a substantially horizontal extension.

4. An industrial truck (10) according to one of claims 1 to 3, wherein the hatch (11) is mounted on a door (13) for closing the compartment, the hatch (11) being mounted on the door (13) in a movable manner between said opening and closing positions, said closing door being in turn movable between a position for closing the compartment and an opening position in which the compartment is open laterally for a height substantially equal to the entire height (H) of the compartment (30).

5. An industrial truck (10) according to claim 4, wherein the closing door (13) is hinged to a frame (31) of the industrial truck with a hinging having a substantially vertical axis.

6. An industrial truck (10) according to one of the preceding claims, wherein the hatch (11) is mounted rotatably between the opening position and the closing position.

7. An industrial truck according to claim 6, wherein in the closing position the hatch (11) is in a position that follows the geometry of the door (13) for closing the compartment, and in the opening position it is arranged facing toward the outside of the industrial truck.

8. An industrial truck (10) according to one of the preceding claims, wherein the hatch (11) is hinged along a larger side thereof so as to able to move between the opening and closing positions.

9. An industrial truck (10) according to claim 8, wherein the hatch (11) is hinged at a larger side thereof which is arranged at the lower part when in the closing position.

10. An industrial truck (10) according to one of the preceding claims, wherein the hatch (11) is positioned at an upper part of the compartment.

11. An industrial truck (10) according to one of the preceding claims, wherein the length (I) of the hatch (11) is equal to at least 70% of a horizontal width (L) of the compartment (30), preferably equal to at least 90% of the horizontal width of the compartment.

12. An industrial truck (10) according to one of the preceding claims, wherein the compartment (30) extends between a front axle (16) and a rear axle (15) of the industrial truck so as to occupy at least 40% of the gap between said rear axle and said front axle.

13. An industrial truck (10) according to one of the preceding claims, wherein the compartment (30) has a height (H) equal to at least 60% of the height of a frame of the industrial truck beneath a seat (20) for the driver of the industrial truck, preferably at least 80% of the height of a frame of the industrial truck beneath a seat (20) for the driver of the industrial truck.

14. An industrial truck (10) according to one of claims 4 to 13, wherein the hatch (11) and the door (13) are configured so as to be able to move independently between the respective opening and closing positions.

15. An industrial truck (10) according to claim 1, wherein the hatch (11) is mounted on a door (13) for closing the compartment in a movable manner between said opening and closing positions, said closing door being in turn movable between a position for closing the compartment and an opening position in which the compartment is opened laterally for a height substantially equal to the entire height (H) of the compartment (30), and wherein the length (I) of the hatch (11) in the horizontal direction is equal to at least 70% of the width (L) in the horizontal direction of the compartment (30).

16. An industrial truck (10) according to claim 1, wherein the hatch (11) is mounted on a door (13) for closing the compartment in a movable manner between the opening and closing positions, said closing door being in turn movable between a position for closing the compartment and an opening position in which the compartment is open laterally for a height substantially equal to the entire height (H) of the compartment (30), wherein the closing door (13) is hinged to a frame (31) of the industrial truck with a hinging having a substantially vertical axis, wherein the hatch (11) has an elongated shape with a substantially horizontal extension and has a length (I) in the horizontal direction equal to at least 70% of the width (L) in the horizontal direction of the compartment (30).
